## Europäisches Patentamt
## European Patent Office
## Office européen des brevets

(19)

(11) Numéro de publication: **0 008 262**
**B1**

(12) **FASCICULE DE BREVET EUROPEEN**

(45) Date de publication du fascicule du brevet: **10.03.82**

(51) Int. Cl.³: **C 09 D 3/66,** C 09 D 5/00, C 08 L 67/00

(21) Numéro de dépôt: **79400513.2**

(22) Date de dépôt: **20.07.79**

(54) Compositions saturées réticulables pour peinture en poudre, préparation de peintures les contenant et procédé d'obtention d'un revêtement.

(30) Priorité: **01.08.78 FR 7822666**

(43) Date de publication de la demande:
**20.02.80 Bulletin 80/4**

(45) Mention de la délivrance du brevet:
**10.03.82 Bulletin 82/10**

(84) Etats contractants désignés:
**BE CH DE GB IT LU NL**

(56) Documents cités:
FR - A - 2 322 172
FR - A - 2 365 613

KITTEL "Lehrbuch der Lacke und Beschichtungen", Vol. III. pages 396—397 (Berlin 1976)

(73) Titulaire: **CHLOE CHIMIE**
**Tour Générale 5, place de la Pyramide Quartier Villon**
**F-92800 Puteaux (FR)**

(72) Inventeur: **Bernelin, Daniel**
**12 Résidence de la Theuillerie**
**F-91130 Ris Orangis (FR)**
Inventeur: **Meyer, Jacques**
**141ter, rue de Saussure**
**F-75017 Paris (FR)**

(74) Mandataire: **Rochet, Michel et al,**
**CHLOE CHIMIE Service Brevets Tour Générale Cedex 22**
**F-92088 Paris la Defense (FR)**

Courier Press, Leamington Spa, England.

## Compositions saturées réticulables pour peinture en poudre, préparation de peintures les contenant et procédé d'obtention d'un revêtement

L'invention concerne des compositions saturées réticulables et un procédé pour la préparation de peintures les contenant de même qu'à un procédé pour l'obtention de revêtements.

On connaît dans l'industrie des peintures l'utilisation de compositions saturées se présentant sous la forme pulvérulente dont le liant peut être constitué d'une résine polyester saturée à fonctions carboxyle associée généralement à un réticulant à fonctions époxyde.

Les compositions pour peinture en poudre contiennent habituellement des charges pigmentaires, le rapport de la charge au liant variant très largement, des adjuvants spécifiques tels que des agents d'étalement, des catalyseurs, des colorants. La préparation de ces compositions comporte en général la préparation séparée du liant et du réticulant, facultativement leur mélange par fusion à une température inférieure à la température pour laquelle ces deux composés réagissent, le mélange par fusion des composants constitutifs du liant avec les charges et adjuvants à une température faible puis le broyage du mélange résultant et la sélection d'une coupe granulométrique. La composition finale est ensuite pulvérisée sur un objet métallique, généralement à l'aide d'un pistolet électrostatique, puis l'objet revêtu de poudre est porté à l'étuve à une température favorisant la fusion et l'étalement de la composition puis la réticulation du liant. On obtient de cette manière un revêtement lisse et brillant. Il est connu que les propriétés mécaniques finales du revêtement sont fonction du degré de réticulation et par conséquent du temps de cuisson. Pour obtenir des propriétés mécaniques optimales, ces compositions nécessitent des temps de cuisson rédhibitoirement longs.

C'est porquoi l'industrie recherche des compositions améliorées permettant d'obtenir des propriétés élevées pour des cadences industrielles plus rapides. Or or a truové qu'il est possible d'obtenir des propriétés mécaniques optimales pour des temps de cuisson très inférieurs à ceux habituellement; ceci permet des cadences industrielles plus élévées et par conséquent des prix de traitement plus faibles.

Dans le brevet français 2.322.172 on décrit des compositions pour peinture en poudre contenant un polyester réticulable, une résine époxyde et en plus, en tant qu'accélérateur de durcissement des sels d'acide gras de métaux divalents. De même, il est connu selon le brevet français n° 2.365.613 que l'adjonction d'oxyde de zinc à des peintures en poudre à base de résine polyester-époxy améliore les propriétés mécaniques de revêtement réticulé. Par ailleurs dans Kittel: "Lehrbuch der Lacke and Beschichtungen", volume III, pages 396—397 (Berlin 1976) on décrit dans l'industrie des peintures l'utilisation d'acétylacétonates de métaux en tant que catalyseurs pour des résines d'époxydes.

Le but de l'invention est de fournir des compositions en poudre réticulables à des températures ne dépassant pas 220°C permettant d'obtenir des revêtements réticulés à propriétés mécaniques améliorées par rapport à celles obtenues à partir de compositions connues au moyen d'un traitement thermique de durée réduite par rapport à la durée du traitement habituellement pratiqué.

Les compositions de l'invention sont constituées d'un système comprenant au moins une résine saturée réticulable de polyester à prédominance de fonctions carboxyliques et au moins une résine époxy et contiennent en outre un oxyde de métal ole valence égale ou supérieure à deux, conjointement avec un catalyseur dudit système qui sera également appelé accélérateur de durcissement dans la description qui suit.

Les polyesters constitutifs des compositions sont des produits connus et sont préparés selon des procédés connus par réaction d'un acide aromatique dicarboxylique ou d'un de ses esters d'alcoyle inférieur avec un diol dans des proportions choisies selon les indices d'acide et d'hydroxyle souhaités sur la résine. Comme acide dicarboxylique aromatique, on peut utiliser plus particulièrement l'acide téréphtalique, isophtalique seuls ou en mélange ou conjointement avec des acides aliphatique dicarboxyliques saturés comme l'acide adipique ou sébacique. En plus, on peut associer aux acides dicarboxyliques des polyacides saturés d'une fonctionnalité supérieure à deux afin de ramifier partiellement le polyester sans qu'il devienne non fusible. Comme exemple d'acide à fonctionnalité supérieure à deux, on peut utiliser l'acide ou l'anhydride trimellitique, pyromellitique, butane tétracarboxylique. Parmi les diols que l'on peut utiliser pour obtenir le polyester, on peut citer à titre d'exemple l'éthylène glycol, le propylène glycol, des diols à pont éther tels que le diéthylène glycol et le dipropylène glycol; les butane diols, le dihydroxydiéthyléther du bisphénol A, le bisphénol A hydrogéné, le néopentylglycol, ces diols étant utilisés seuls ou en mélange. En plus, on peut associer aux diols précédents des polyols de fonctionnalité supérieure à deux tels que le glycérol, le triméthylolpropane, le trihydroxyéthylisocyanurate, le pentaérythritol. Il est bien évident que la proportion de polyacide ou de polyol de fonctionnalité supérieure à deux doit être telle qu'elle n'aboutisse pas à une réticulation avancée et par conséquent à une infusibilité du polyester lors de sa préparation. La proportion maximale de monomère à fonctionnalité supérieure à deux est définie par la loi de Flory en fonction de l'avancement de la réaction (voir à ce sujet T. ALFREY, Méchanical Behaviour of high polymers Interscience Publishers Vol. VI — p. 268).

D'une manière générale, les polyesters saturés utilisés dans les compositions de l'invention sont de masses solides dont le point de ramollissement mesuré selon la méthode bille et anneau est compris entre 50°C et 130°C, et présentent un indice d'acide généralement compris entre 20 et 100, et un indice d'hydroxyle inférieur généralement à 20 de préférence inférieur à 10. Les compositions de l'invention ne sont pas limitées à l'utilisation d'un polyester saturé unique mais elles comprennent également l'utilisation conjointe de deux ou plusieurs des polyesters précédents.

L'autre constituant des systèmes des compositions de l'invention est un composé présentant des groupements époxyde réagissant avec les groupements réactifs des résines de polyesters précédentes. De préférence le composé à fonctions époxyde est au moins difonctionnel.

Comme composé à fonction époxyde, on utilise habituellement des produits connus de condensation d'un diphénol tel que le 2,2-(4-hydrophényl)-propane et d'une épihalohydrine telle que l'épichlorhydrine et ils sont préparés selon des procédés connus. Les résines époxydes utilisées dans les compositions de l'invention sont desmasses solides dont le point de fusion mésuré selon la méthode bille et anneau est compris entre 50°C et 120°C, et dont l'indice d'époxy est compris entre 400 et 1500.

Les compositions de l'invention contiennent outre la résine saturée réticulable de polyester et la résine époxyde précédemment définies, un oxyde de métal choisi parmi le zinc et le magnésium. De préférence, l'oxyde de métal est utilisé sous forme anhydre ou séchée à une température telle qu'il ne se dégage pas d'eau de l'oxyde éventuellement sous forme hydratée pendant le traitement de cuisson et sous forme d'une poudre fine, de préférence de dimension de particules inférieure à 10 microns.

La teneur pondérale de l'oxyde de métal par rapport au liant comprenant les deux résines précédentes est comprise entre 0,1% et 5% de préférence entre 0,5 et 3%.

En outre, les compositions de l'invention contiennent un catalyseur d'ouverture du cycle époxyde. On utilise en tant que catalyseur de l'acétylacétonate de zinc.

Le rapport pondéral du catalyseur au liant organique constitué de la résine saturée de polyester et du liant époxyde est en général compris entre 0,1 et 5%, de préférence entre 0,5% et 3%.

Les compositions de l'invention sont réticulables par polyaddition et/ou polycondensation à des températures voisines de 180°C pendant des temps variant entre 15 et 30 minutes. Le rapport pondéral de la résine saturée de polyester à la résine époxyde est variable selon l'indice d'acide de la résine et l'équivalent époxy de la résine d'époxyde le rapport pondéral est tel qu'il y ait sensiblement équilibre dans la composition finale de fonctions réactives de la résine saturée et celui des fonctions de la résine époxyde.

Les formulations pour peinture en poudre contenant les compositions de l'invention contiennent habituellement des adjuvants classiques bien connus dans l'industrie des peintures tels que des charges, des pigments, des colorants. On peut également y incorporer des agents d'étalement tels que des polymères acryliques et des huiles de silicones.

De préférence, l'oxyde de métal et le catalyseur sont introduits dans le liant pulvérulent sous forme d'un mélange mécanique avec les ingrédients pour peinture, préalablement au mélange final de la composition par fusion et broyage. La température de mélange est inférieure à 120°C, de préférence inféreiure à 100°C, et le temps de mélange de l'ordre de 5 minutes variable selon le mélangeur.

On applique les mélanges ainsi obtenus selon des procédés connus tels que le lit fluide, la pulvérisation préalablement dégraisses tels que des pièces métalliques ou céramiques, puis on procède à la réticulation à des températures voisines de 180°C pendant 15 à 30 minutes. L'épaisseur moyenne du revêtement obtenu sur le support est généralement comprise entre 30 et 100 microns.

Les compositions de l'invention permettent d'obtenir des revêtements réticulés à propriétés mécaniques optimales dans des conditions de durée de traitement thermique compatible avec la pratique industrielle. Notamment elles permettent d'obtenir des revêtements dont la résistance au choc mesurée selon la norme NFT 30039 peut atteindre des valeurs égales ou supérieurs à 50 kg.cm.

Afin de mieux illustrer l'invention, on donne ciaprès un exemple qui est représentatif mais non limitatif de l'invention, les parties étant exprimées en poids sauf indication contraire.

Exemple 1
A — Preparation des resines de polyester On utilise comme résine de polyester typique à fonctions carboxyliques, un produit présentant la composition molaire suivante:

| | | |
|---|---|---|
| — acide isophtalique | 1 | mole |
| — acide adipique | 0,2 | mole |
| — propylène glycol | 1,37 | mole |
| — anhydride trimellique | 0,1 | mole |

Dans un réacteur de polycondensation d'une capacité de 4 litres muni d'un agitateur, d'une jaquette de chauffage et refroidissement et d'un tube de barbotage d'azote, on chauffe et fait réagir à 200°C sous atmosphère d'azote un mélange de:

— 1660 g d'acide isophtalique
—  384 g d'anhydride trimellitique
— 1079 g de propylène glycol
—  292 g d'acide adipique

jusqu'à l'obtention d'un indice d'acide de 85 et d'un indice d'hydroxyle de 5. le produit est coulé, refroidi et broyé. Son point de fusion selon la méthode bille et anneau est de 83°C.

B — Resines Epoxyde

On utilise une résine époxy commercialement disponible et vendue par la Société SHELL sous la dénomination Epikote 1004 dont l'indice d'époxy est compris entre 840 et 950.

C — Preparation des compositions de revetement

Dans un mélangeur à poudre, on place et homogénéise les constituants des différentes compositions indiquées au tableau 1.

Le mélange obtenu est extrudé sur un mélangeur BUSS à une température de 100°C et l'extrudat est broyé et tamisé sur un tamis d'ouverture de maille 100 microns.

La poudre résultante est appliquée à l'aide d'un pistolet électrostatique (marque SAMES) sur une plaque d'acier (dégraissée au préalable) de dimensions 20 cm × 10 cm × 0,08 cm. Cette plaque est ensuite étuvée à 180°C pendant des temps de 15 (conditions a/du tableau II) et 30 minutes (conditions b/du tableau II).

Après refroidissement on mesure les propriétés sui vantes au feuil de peinture:
— résistance au choc: mesurée selon la norme NFT 30039
— emboutissage Erichsen: mesuré selon la norme NFT 30019
— pliage ASTM: mesuré selon la norme ASTM D 522—60

Les Résultats obtenus sont réunis dans le tableau II

TABLEAU I

COMPOSITIONS POUR PEINTURES (en parties en poids)

| Compositions n° / Composants | 1 | 2 | 3 | 4 | 5 | 6 | 7 | 8 | 9 | 10 | 11 | 12 | 13 | 14 | 15 | 16 |
|---|---|---|---|---|---|---|---|---|---|---|---|---|---|---|---|---|
| Résine polyester selon A ci-dessus | 50 | 50 | 50 | 50 | 50 | 50 | 50 | 50 | 50 | 50 | 50 | 50 | 50 | 50 | 50 | 50 |
| Résine époxyde selon B ci-dessus | 50 | 50 | 50 | 50 | 50 | 50 | 50 | 50 | 50 | 50 | 50 | 50 | 50 | 50 | 50 | 50 |
| $TiO_2$ rutile (1) | 50 | 50 | 50 | 50 | 50 | 50 | 50 | 50 | 50 | 50 | 50 | 50 | 50 | 50 | 50 | 50 |
| Agent d'étalement (2) | 2 | 2 | 2 | 2 | 2 | 2 | 2 | 2 | 2 | 2 | 2 | 2 | 2 | 2 | 2 | 2 |
| Oxyde de zinc (3) | — | 1 | 2 | — | — | 1 | 1 | — | — | 1 | 1 | — | — | — | — | — |
| Oxyde de magnésium (4) | — | — | — | — | — | — | — | — | — | — | — | 1 | 1 | 1 | 1 | 1 |
| Acétyl acétonate de zinc (5) | — | — | — | 1 | 2 | 1 | 2 | — | — | — | — | — | 1 | 2 | — | — |
| Acétyl acétonate de magnesium (6) | — | — | — | — | — | — | — | 1 | 2 | 1 | 2 | — | — | — | 1 | 2 |

(1) KRONOS CL 220 vendu par la Société Industrielle du Titane.

(2) ACRONAL 4 F Polymère acrylique vendu par la Société BASF.

(3) Oxyde de zinc extra pur qualité CODEX.

(4) Oxyde de magnésium calciné vendu par la Société PROLABO.

(5) Vendu par la Société DYNAMIT NOBEL.

(6) Vendu par la Société DYNAMIT NOBEL.

TABLEAU II

PROPRIETES ET COMMENTAIRES

| Composition n° | Conditions de cuisson | Epaisseur du feuil en $\mu$ | Essai ERICHSEN NFT 30019 | Essai au choc NFT 30039 kgcm | Pliage ASTM D 522–60 | |
|---|---|---|---|---|---|---|
| | | | | | E % | $\phi$ mm |
| 1 | a<br>b | 52<br>53 | 1,5<br>2 | 2<br>5 | 2,9<br>2,9 | 38<br>38 |
| 2 | a<br>b | 50<br>54 | 1,25<br>2 | 2<br>6 | 2,9<br>2,9 | 38<br>38 |
| 3 | a<br>b | 57<br>58 | 1,4<br>1,1 | 1,4<br>1,5 | 2,9<br>2,9 | 38<br>38 |
| 4 | a<br>b | 63<br>52 | 1,8<br>4,1 | 2<br>14 | 2,9<br>8,65 | 38<br>15,8 |
| 5 | a<br>b | 51<br>60 | 3,2<br>3 | 19<br>19 | 8,77<br>8,77 | 15,8<br>15,8 |
| 6 | a<br>b | 48<br>45 | 6,2<br>7 | 19<br>55 | >32<br>>32 | <3<br><3 |
| 7 | a<br>b | 44<br>46 | 4<br>7 | 20<br>65 | 15,8<br>>32 | 8,51<br><3 |
| 8 | a<br>b | 55<br>62 | 0,8<br>1,5 | 2<br>2 | 2,9<br>2,9 | 38<br>38 |

TABLEAU II (Suite)

PROPRIETES ET COMMENTAIRES

| Composition n° | Conditions de cuisson | Epaisseur du feuil en $\mu$ | Essai ERICHSEN NFT 30019 | Essai au choc NFT 30039 kgcm | Pliage ASTM D 522–60 | |
|---|---|---|---|---|---|---|
| | | | | | E % | $\phi$ mm |
| 9 | a | 68 | 1,4 | 2 | 2,9 | 38 |
| | b | 65 | 3 | 2 | 8,86 | 15,8 |
| 10 | a | 68 | 0,8 | 2 | 2,9 | 38 |
| | b | 45 | 4,1 | 25 | >32 | <3 |
| 11 | a | 55 | 1 | 2 | 2,9 | 38 |
| | b | 64 | 4,8 | 25 | 8,75 | 15,8 |
| 12 | a | 66 | 1,5 | 2 | 2,9 | 38 |
| | b | 70 | 1,5 | 2–3 | 2,9 | 38 |
| 13 | a | 64 | 3,5 | 10–15 | 12,5 | 13,8 |
| | b | 68 | 4 | 30–40 | 14,3 | 11,90 |
| 14 | a | 72 | 4 | 30–35 | 13,2 | 12,6 |
| | b | 68 | 4 | 25–35 | 13,3 | 12,5 |
| 15 | a | 62 | 2 | 5–10 | 2,8 | 16 |
| | b | 60 | 3 | 10–15 | >32 | <3 |
| 16 | a | 60 | 1,4 | 4–5 | 5,1 | 12,5 |
| | b | 68 | 4,5 | 10–15 | 16 | 13,8 |

0 008 262

La comparaison des propriétés des compositions témoins et de celles des compositions comprenant conjointement un oxyde de zinc ou de magnésium et l'acétylacétonate de zinc, montre les résultats améliorés obtenus à l'aide de ces combinaisons.

## Revendications

1. Composition saturée réticulable pour liant de peinture en poudre comprenant au moins une résine saturée de polyester à prédominance de fonctions carboxyle et au moins un réticulant de ladite résine à fonctions époxyde, caractérisée en ce qu'elle contient en plus un oxyde de métal choisi parmi l'oxyde de zinc et de magnésium, et en tant qu'accélérateur de durcissement de l'acétylacétonate de zinc.

2. Composition selon la revendication 1, caractérisée en ce que le rapport pondéral de l'oxyde de métal au liant résineux est compris entre 0,1% et 5%, de préférence entre 0,5% et 3%.

3. Composition selon l'une quelconque des revendications précédentes, caractérisée en ce que le rapport pondéral de l'acétylacétonate de zinc au liant résineux est compris entre 0,1 et 5%, de préférence entre 0,5% et 3%.

4. Procédé de préparation d'une peinture en poudre dont le liant est une composition selon l'une quelconque des revendications précedentes caractérisé en ce que l'on mélange à sec les constituants de ladite peinture, puis en ce que l'on homogénéise par fusion ledit mélange à une température de 100°C, en ce que l'on broye et tamise le produit résultant de la fusion.

5. Procédé amélioré d'obtention d'un revêtement réticulé caractérisé en ce que l'on réticule à 180°C pentant des temps compris entre 15 et 30 minutes une peinture en poudre préparée selon la revendication 4.

## Claims

1. A saturated cross-linkable composition for a binder for paint in powder form comprising at least one saturated polyester resin having a predominance of carboxyl functions and at least one cross-linking agent for said resin, having epoxide functions, characterised in that it also contains a metal oxide selected from zinc and magnesium oxide, and zinc acetylacetonate as a hardening accelerator.

2. A composition according to claim 1 characterised in that the ratio by weight of the metal oxide to the resinous binder is between 0.1% and 5% and preferably between 0,5% and 3%.

3. A composition according to either one of the preceding claims characterised in that the ratio by weight of the zinc acetylacetonate to the resinous binder is between 0.1 and 5% and preferably between 0.5% and 3%.

4. A process for preparing a paint in powder form wherein the binder is a composition according to any one of the preceding claims characterised in that the constituents of said paint are mixed in a dry condition, then said mixture is homogenised by fusion at a temperature of 100°C, and that the product resulting from the fusion operation is crushed and sieved.

5. An improved process for producing a cross-linked coating characterised in that a paint in powder form which is prepared in accordance with claim 4 is cross-linked at a temperature of 180°C for periods of time of from 15 to 30 minutes.

## Patentansprüche

1. Vernetzbare gesättigte Mischung für pulverförmige Farbbindemittel mit mindestens einem gesättigten Polyesterharz mit vorwiegend Carboxylfunktionen und mindestens einem Vernetzungsmittel des genannten Harzes mit Epoxidfunktionen, dadurch gekennzeichnet, daß sie ferner ein Metalloxid, ausgewählt zwischen Zink- und Magnesiumoxid und als Härtungsbeschleuniger Zinkacetylacetonat enthält.

2. Mischung nach Anspruch 1, dadurch gekennzeichnet, daß das Gewichtsverhältnis des Metalloxides zu dem harzartigen Bindemittel zwischen 0,1% und 5%, vorzugsweise zwischen 0,5% und 3% beträgt.

3. Mischung nach irgendeinem der vorstehenden Ansprüche, dadurch gekennzeichnet, daß das Gewichtsverhältnis des Zinkacetylacetonates zu dem harzartigen Bindemittel zwischen 0,1 und 5%, vorzugsweise zwischen 0,5% und 3%, beträgt.

4. Verfahren zur Herstellung einer pulverförmigen Farbe, deren Bindemittel eine Mischung nach irgendeinem der vorstehenden Ansprüche ist, dadurch gekennzeichnet, daß man in trockenem Zustand die Bestandteile der genannten Farbe mischt, anschließend diese Mischung durch Schmelzen bei einer Temperatur von 100°C homogenisiert und das Schmelzprodukt zerkleinert und siebt.

5. Verbessertes Verfahren zum Erhalt einer vernetzten Schicht, dadurch gekennzeichnet, daß man über eine Zeit zwischen 15 und 30 Minuten eine pulverförmige Farbe, hergestellt gemäß Anspruch 4 bei 180°C vernetzt.